# EUROPÄISCHE PATENTANMELDUNG

(11) **EP 3 954 547 A1**
(43) Veröffentlichungstag der Anmeldung: **16.02.2022**
(21) Anmeldenummer: 21190732.4
(22) Anmeldetag: 11.08.2021
(51) Int. Cl.: B60B 29/00, B62B 7/00, B62B 9/12

(54) **SICHERUNGSMECHANISMUS**

(30) Priorität: 13.08.2020 DE 102020121346
(71) Anmelder: Emmaljunga Holding AB, 28268 Vittsjö (SE)
(72) Erfinder: Wedin, Erik, 28267 Vittsjö (SE); Edvardsson, Joakim, 28143 Hässleholm (SE); Persson, Christian, 28268 Vittsjö (SE)
(74) Vertreter: Müller Schupfner & Partner Patent- und Rechtsanwaltspartnerschaft mbB

(57) **Zusammenfassung**

Sicherungsmechanismus umfassend eine Basis (4) und eine Stelleinheit (6), wobei die Stelleinheit gegen Verlagerung längs einer Rotationsachse (R) relativ zur Basis sicherbar ist und in einem ungesicherten Zustand relativ zur Basis um die Rotationsachse drehbar gelagert ist, wobei in einem gesicherten Zustand eine Halteeinheit (10) zwischen der Stelleinheit und der Basis wirkt und eine Rotation der Stelleinheit relativ zur Basis verhindert, wobei die Stelleinheit mit einem Anschlusselement (8) in Eingriff steht oder ein Anschlusselement als einstückiger Abschnitt an der Stelleinheit ausgebildet ist, welches Anschlusselement (8) in einen lösbaren Eingriff mit der Aufnahmegeometrie eines Fahrzeuges bringbar ist, wobei ein Verdrehen der Stelleinheit relativ zur Basis in einer Sicherungsrichtung das Anschlusselement in Eingriff mit der Aufnahmegeometrie bringt, wobei ein Verdrehen der Stelleinheit (6) relativ zur Basis in einer Entsicherungsrichtung das Anschlusselement außer Eingriff mit der Aufnahmegeometrie bringt.

## Beschreibung

Die vorliegende Erfindung betrifft einen Sicherungsmechanismus, insbesondere zur Festlegung eines vorzugsweise rotierenden Bauteils an einem Fahrzeug.

Sicherungsmechanismen zur Festlegung von beispielsweise Rädern an einem Fahrzeug, wie beispielsweise einem Kinderwagen oder einem sonstigen Kindertransportfahrzeug, sind aus dem Stand der Technik zwar bereits bekannt. Bei den bekannten Lösungen eines Festlegungs- und Sicherungsmechanismus tritt aber oft das Problem auf, dass es für einen Anwender nur schwer feststellbar ist, ob der Sicherungsmechanismus tatsächlich in der gesicherten Stellung vorliegt und somit das festzulegende rotierende Bauteil sicher an dem Fahrzeug festgelegt ist. Weiterhin hat es sich gezeigt, dass die bekannten Sicherungsmechanismen, welche insbesondere elastisch verformbare Bauteile einsetzen, die in einer Click-Verbindung miteinander in einer geschlossenen oder gesicherten Position gehalten werden können, hohem Verschleiß unterliegen. Es ist bei den aus dem Stand der Technik bekannten Lösungen möglich, ein Bauteil nur teilweise festzulegen, wobei dem Anwender kein warnendes Feedback gegeben wird. Dabei ist die erforderliche Sicherheit der Befestigung der Bauteile aneinander nicht dauerhaft sichergestellt.

Aufgabe der vorliegenden Erfindung ist es, einen Sicherungsmechanismus bereitzustellen, welcher zum Einen die Erkennbarkeit des Vorhandenseins eines gesicherten Zustandes Sicherung verbessert und zum anderen auch die von der Sicherung aufnehmbaren Kräfte erhöht und den Verschleiß reduziert.

Diese Aufgabe wird gelöst mit einem Sicherungsmechanismus gemäß Anspruch 1. Weitere Merkmale vorteilhafter Ausführungsformen der Erfindung ergeben sich aus den abhängigen Ansprüchen.

Erfindungsgemäß umfasst der Sicherungsmechanismus eine Basis und eine Stelleinheit, wobei die Stelleinheit gegen Verlagerung längs einer Rotationsachse relativ zur Basis sicherbar ist und in einem ungesicherten Zustand relativ zur Basis um die Rotationsachse drehbar gelagert ist, wobei in einem gesicherten Zustand eine Halteeinheit zwischen der Stelleinheit und der Basis wirkt und eine Rotation der Stelleinheit relativ zur Basis verhindert, wobei die Stelleinheit mit einem Anschlusselement in Eingriff steht, welches in einen lösbaren Eingriff mit der Aufnahmegeometrie eines Fahrzeuges bringbar ist, wobei ein Verdrehen der Stelleinheit relativ zur Basis in einer Sicherungsrichtung das Anschlusselement in Eingriff mit der Aufnahmegeometrie bringt, wobei ein Verdrehen der Stelleinheit relativ zur Basis in einer Entsicherungsrichtung das Anschlusselement außer Eingriff mit der Aufnahmegeometrie bringt. Der Sicherungsmechanismus weist erfindungsgemäß das Grundprinzip der lösbaren Sicherung einer Stelleinheit gemeinsam mit einer Basis und einem Anschlusselement an der Aufnahmegeometrie eines Fahrzeuges mithilfe einer Verdrehung bzw. Rotation einer Stelleinheit relativ dieser Basis auf. Dieser grundlegende Unterschied zu Sicherungsmechanismen, bei denen translatorische Längsbewegungen, bzw. Linearbewegungen insbesondere senkrecht zu einer Rotationsachse einen formschlüssigen Eingriff mit einer Aufnahmegeometrie an einem Fahrzeug herstellen oder wieder lösen, erlaubt die Herstellung eines Formschlusses mit größeren übertragbaren Kräften und damit einer sichereren Befestigung. Weiterhin ist ein größerer Betätigungsweg zwischen einem gesicherten Zustand und einem ungesicherten Zustand möglich, was die Sicherheit der durch den Sicherungsmechanismus bereitgestellten Verbindung erhöht. Der lösbare Eingriff der Aufnahmegeometrie mit dem Anschlusselement kann dabei beispielsweise eine Bajonettverbindung, eine gewindeartige form- und kraftschlüssige Verbindung oder das Herstellen einer Hinterschneidung mit der Aufnahmegeometrie sein. In einer bevorzugten Ausführungsform ist eine ca. 90°-Rotation der Stelleinheit relativ zur Basis vorgesehen, um den Sicherungsmechanismus von dem ungesicherten in den gesicherten Zustand und umgekehrt zu bringen. Durch im Rahmen der vorliegenden Erfindung vorgesehene Aufgabenteilung, insbesondere, dass das Anschlusselement die formschlüssige Festlegung der Basis an einem Fahrzeug übernimmt und die Halteeinheit gemeinsam mit der Stelleinheit die Sicherung des Aufnahmeelements in einer Drehstellung, in welcher die sichere Festlegung am Fahrzeug gewährleistet ist, bereitstellt, können beide Baugruppen optimal für ihre jeweilige Aufgabe angepasst werden. Das Anschlusselement kann aus festem und kaum elastisch verformbarem Material hergestellt sein, was hohe übertragbare Kräfte bei geringem Verschleiß erlaubt. Die Halteeinheit kann neben der optimierten Verdrehsicherung auch eine Warn- oder Signalfunktion für einen Anwender bezüglich des Zustandes des Sicherungsmechanismus übernehmen. Mit Vorteil ist dabei die Rotationsachse dieselbe Achse, um welche drehbar ein Rad des Fahrzeuges mittels des Sicherungsmechanismus' gelagert ist. Dabei rotieren sowohl die Stelleinheit, als auch bevorzugt das Anschlusselement um ein und dieselbe Rotationsachse, was eine besonders stabile und kompakte Bauweise des Sicherungsmechanismus' ergibt, und den geringsten Bauraum für den Sicherungsmechanismus beansprucht.

Mit Vorteil ist die Basis ein Teil einer Felge eines Rades des bevorzugt als Kindertransportfahrzeug ausgebildeten Fahrzeuges, wobei die Aufnahmegeometrie an einer rotierenden Radanbindung oder an einem starren Achsstummel ausgebildet ist. Die Basis ist damit mit Vorteil ein Teil einer Felge eines Kindertransportfahrzeuges, wie beispielsweise eines Kinderwagens oder eines Fahrradanhängers. Die Aufnahmegeometrie ist weiterhin bevorzugt in einer ersten Ausführungsform an einer rotierenden Radanbindung, das heißt beispielsweise einem Radträger, welcher mit einem Antrieb oder mit einer Bremse an einem Kindertransportfahrzeug verbunden ist, ausgebildet. Alternativ kann die Aufnahmegeometrie auch in herkömmlicher Weise an einen starren Achsstummel, welcher nicht rotierend am Rahmen oder am Fahrgestell des Kindertransportfahrzeuges festgelegt ist, ausgebildet sein. Für den Fall, dass die Aufnahmegeometrie an einer rotierenden Radanbindung festgelegt ist, ist es bevorzugt, dass die Basis gegen Rotation gesichert an der Radanbindung angeordnet werden kann, wobei beispielsweise Vorsprünge und Rücksprünge an der rotierenden Radanbindung und an der Basis ein Rotieren der beiden Bauteile relativ zueinander verhindern. Auf diese Weise rotiert somit die Basis gemeinsam mit der rotierenden Radanbindung, wobei die formschlüssige Verbindung des Anschlusselements mit der Aufnahmegeometrie keine Relativbewegungen zur Basis und zur Radanbindung durchführt und somit gemeinsam mit der Basis und der Radanbindung rotiert. Im alternativen Fall eines starren Achsstummels ist es bevorzugt, dass die Basis drehbar an dem Achsstummel und somit auch drehbar relativ zur Aufnahmegeometrie angeordnet ist. In diesem Fall führt eine Verdrehung der Stelleinheit zu einer Querschnittsveränderung an dem Anschlusselement, wobei diese Querschnittsveränderung an des Anschlusselements geeignet ist, mit der Aufnahmegeometrie eine Hinterschneidung zu bilden oder diese Hinterschneidung wieder zu lösen, um letztendlich die Basiseinheit von dem starren Achsstummel entnehmen zu können. Auch für die Herstellung dieser Hinterschneidung mit der Aufnahmegeometrie ist eine Verdrehung der Stelleinheit um eine Rotationsachse bestens geeignet, um einen sicheren Eingriff des Anschlusselements mit der Aufnahmegeometrie zu gewährleisten.

Weiterhin bevorzugt umfasst die Halteeinheit ein Halteelement, welches von einem Rückstellmittel gegen eine Haltestellung vorgespannt an der Basis oder an der Stelleinheit gelagert ist, wobei das Halteelement in der Haltestellung mit einer ersten Haltegeometrie der Basis und mit einer zweiten Haltegeometrie der Stelleinheit in formschlüssigem Eingriff steht und den Sicherungsmechanismus so im gesicherten Zustand hält. Das Halteelement ist in einer ersten bevorzugten Ausführungsform vorzugsweise als stiftartiges oder bolzenartiges Bauteil ausgeführt, welches entweder an der Basis oder an der Stelleinheit gelagert ist und dort von einem Rückstellmittel in Richtung einer Haltestellung vorgespannt wird. Die Haltestellung ist dabei vorzugsweise dadurch definiert, dass das Halteelement maximal aus seiner jeweiligen Aufnahmegeometrie, an der Basis oder an der Stelleinheit, herausragt und somit eine maximale Querschnittsüberschneidung mit der jeweils anderen ersten oder zweiten Haltegeometrie an der jeweils anderen Einheit, Basis oder Stelleinheit, herstellen kann. Als Rückstellmittel kommt im vorliegenden Fall vorzugsweise eine Spiralfeder oder beispielsweise auch ein Schaumstoff- oder Gummielement zum Einsatz, welche jeweils zum Aufbringen einer Druckkraft ausgelegt sind. Wenn sich das Halteelement in der Haltestellung befindet, also maximal aus seiner Aufnahmegeometrie an einer der beiden Einheiten Basis- oder Stelleinheit herausragt, befindet sich dieses im formschlüssigen Eingriff mit einer ersten Haltegeometrie der Basis und einer zweiten Haltegeometrie der Stelleinheit, wobei dieser Formschluss vorzugsweise derart wirkt, dass eine Verdrehung der Stelleinheit relativ zur Basis verhindert ist und somit der Sicherungsmechanismus im gesicherten Zustand gehalten ist.

Mit Vorteil sind sowohl die erste Haltegeometrie als auch die zweite Haltegeometrie als Vertiefungen im Material der Stelleinheit und der Basis ausgebildet, so dass in einer der Haltegeometrien das Halteelement und das Rückstellmittel geführt angeordnet sind und, sobald das Halteelement in die Haltestellung gelangt, auch ein möglichst in alle Richtungen quer zur Verlagerungsrichtungen des Halteelementes wirkender Formschluss zwischen dem Halteelement und der jeweils anderen Haltegeometrie hergestellt ist. Auf diese Weise kann zum einen verhindert werden, dass das Halteelement aus der Basis oder der Stelleinheit herausfällt, zum anderen ist eine sichere Verbindung des Halteelementes im gesicherten Zustand des Sicherungsmechanismus garantiert.

Mit Vorteil bringt eine Verlagerung entgegen der Vorspannkraft das Halteelement außer Eingriff mit der ersten oder der zweiten Haltegeometrie, wobei der Sicherungsmechanismus in den ungesicherten Zustand versetzt ist, wobei sich das Halteelement bei Verdrehung der Stelleinheit an einer Stützfläche abstützt. Mit Vorteil kann insbesondere bevorzugt durch händisches Einwirken eines Benutzers des Sicherungsmechanismus, das Halteelement entgegen der Vorspannkraft verlagert werden, wobei dieses außer Eingriff mit der ersten oder der zweiten Haltegeometrie gelangt. Wenn ausgehend von diesem Zustand die Stelleinheit relativ zur Basis verdreht wird, ist es bevorzugt vorgesehen, dass sich das Halteelement, anstatt wieder in die jeweils erste oder zweite Haltegeometrie zurückzuwandern, an einer Stützfläche abstützt, an welcher das Halteelement entlanggleiten kann, während die Stelleinheit relativ zur Basis gedreht wird. Diese Stützgeometrie kann entsprechend der Anordnung des Halteelementes an der Basis oder an der Stelleinheit an dem jeweils anderen Bauteil, oder an einem weiteren speziell hierfür vorgesehenen dünnwandigen Bauteil, welches insbesondere in leichtes Gleiten des Halteelementes erlaubt, ausgebildet sein.

In einer besonders bevorzugten Ausführungsform ist ein Werkzeug vorgesehen, welches derart geformt ist, dass damit zum einen das Halteelement aus seiner Haltestellung und entgegen Vorspannkraft verlagert werden kann und gleichzeitig ein formschlüssiger Eingriff mit einer Betätigungsgeometrie der Betätigungseinheit hergestellt ist, welcher das Übertragen eines Drehmomentes vom Anwender über das Werkzeug an die Stelleinheit erlaubt. Das Werkzeug erlaubt somit einen Ergonomischen Eingriff mit dem Sicherungsmechanismus, welcher mit bloßen Händen nur bedingt möglich wäre, was wiederum die Sicherheit der bereitgestellten Festlegung im Betrieb des Sicherungsmechanismus erhöht.

In einer ersten bevorzugten Ausführungsform wirkt die Vorspannkraft des Halteelementes parallel zur Rotationsachse. Bei dieser Ausführungsform ist somit bevorzugt das Halteelement derart gelagert, dass es gegen Verlagerung quer zur Rotationsachse oder entlang einer Umfangsrichtung um die Rotationsachse an der Basis oder der Stelleinheit gesichert ist und in einer parallel zur Rotationsachse laufenden Achse in die jeweils erste oder zweite Haltegeometrie hinein und aus dieser heraus verlagert werden kann, wobei die Vorspannkraft entsprechend auch entlang einer parallel zur Rotationsachse laufenden Richtung wirkt. Diese Ausführungsform hat den Vorteil, dass das Halteelement durch eine Druckkraft auf dessen nach außen ragende Stirnfläche entgegen der Vorspannkraft des Rückstellmittels verlagert werden kann, und somit außer Eingriff mit einer der Haltegeometrien gebracht werden kann, um die Stelleinheit anschließend relativ zur Basis verdrehen zu können. Dies erlaubt ein einfaches Erreichen des Halteelementes von der Stirnfläche der Stelleinheit und/oder der Basis aus.

Alternativ bevorzugt wirkt die Vorspannkraft des Halteelementes orthogonal zur Rotationsachse. Als Alternative zu der parallel zur Rotationsachse wirkenden Vorspannkraft ist es vorgesehen, dass das Halteelement längs einer Senkrechten zur Rotationsachse und somit im Wesentlichen in radialer Richtung bezogen auf die Rotationsachse verlagerbar ist und auch die Vorspannkraft des Rückstellmittels entlang dieser Achse wirkt. Dabei ist es bevorzugt, dass die Vorspannkraft des Rückstellmittels nach radial außen, also von der Rotationsachse weg weisend wirkt, da in diesem Fall die Fliehkraft des rotierenden Rades eine zusätzliche Verlagerung und das Halten des Halteelementes in der Haltestellung gewährleistet und der Vorspannkraft nicht entgegen wirkt. Der Vorteil dieser Ausführungsform ist, dass das Halteelement über eine sich radial über eine große Strecke erstreckende erste und zweite Haltegeometrie an der Stelleinheit und an der Basis abstützen kann, was eine erhöhte Momentübertragung von der Stelleinheit auf das Halteelement und an die Basis bei reduzierter Flächenpressung erlaubt. In einer besonders bevorzugten Ausführungsform ist ein erstes Halteelement, welches parallel zur Rotationsachse vorgespannt ist und ein zweites Halteelement, welches orthogonal zur Rotationsachse vorgespannt ist an dem Sicherungsmechanismus vorgesehen, wodurch doppelte Sicherheit und insbesondere eine bessere Sicherheit gegen versehentliches Öffnen des Halteelementes, welches zum unbeabsichtigten Lösen der Basis von dem Fahrzeug führen kann, verhindert ist.

Mit Vorteil weist die Stelleinheit eine Betätigungsgeometrie auf, welche ausgelegt ist ein Drehmoment um die Rotationsachse auf die Stelleinheit zu übertragen. Die Betätigungsgeometrie ist in einer ersten Ausführungsform vorzugsweise als Rücksprung ausgebildet, in welchen ein einsprechend angepasstes Werkzeug eingeführt werden kann um von einem Anwender ein Drehmoment auf die Stelleinheit zu übertragen. Als einfachste Variante einer solchen Betätigungsgeometrie hat sich eine schlitzförmige Aussparung an der senkrecht zur Rotationsachse stehenden Fläche der Stelleinheit bewährt. Es versteht sich, dass auch andere Eingriffsgeometrien, wie beispielsweise ein Innensechskant oder eine Torx-Geometrie oder ähnliche Formen an der Betätigungsgeometrie vorgesehen sein können, welche das Übertragen eines Drehmomentes auf die Stelleinheit erleichtern. Der Vorteil einer als Rücksprung ausgebildeten Betätigungsgeometrie ist hingegen, dass keine nach außen ragenden Teile an der Stelleinheit vorgesehen sind, welche leicht beschädigt werden könnten oder einem vorbeilaufenden Anwender Verletzungen zufügen könnten.

In einer alternativen Ausführungsform kann die Betätigungsgeometrie auch als Vorsprung ausgebildet sein, an welchem ein Anwender ohne die Notwendigkeit eines Werkzeuges händisch angreifen kann um das Festlegen und Lösen der Basis von dem Fahrzeug zu ermöglichen.

In einer besonders bevorzugten Ausführungsform ist die Halteeinheit beabstandet von der Rotationsachse angeordnet, wobei der geringste Abstand der Halteeinheit von der Rotationsachse vorzugsweise zumindest das 0,4-fache, bevorzugt das zumindest 0,6-fache der größten Erstreckung der Stelleinheit beträgt. Mit dieser Ausführungsform ist gewährleistet, dass die Halteeinheit zur Übertragung eines die Basis und die Stelleinheit gegen Verlagerung, insbesondere Verdrehung zueinander sichernden Drehmomentes einen ausreichend großen Hebelarm aufweist. Es ist daher prinzipiell bevorzugt, dass das Halteelement in der äußeren Hälfte, der sich vorzugsweise kreisförmig erstreckenden Geometrie der Stelleinheit anzuordnen. Im Rahmen der vorliegenden Erfindung hat sich gezeigt, dass das zumindest 0,4-fache der größten Erstreckung der Stelleinheit ein ausreichender Abstand von der Rotationsachse ist um ausreichend große Drehmomente mit auch durch kleine Halteeinheiten aufbringbaren Haltekräften zu ermöglichen. Im Bereich des 0,6-fachen der größten Erstreckung der Stelleinheit wird das die Halteeinheit zwar nach außen weiter verlagert, was das aufbringbare Drehmoment steigert. Hierbei ist es aber aufgrund des begrenzten Bauraumes an der Stelleinheit und an der Basis günstig die Halteeinheit nicht an den äußersten Rand der Stelleinheit zu verlagern. Es hat sich gezeigt, dass ein Bereich des 0,6-fachen bis 0,8-fachen der größten Erstreckung der Stelleinheit ein optimaler Kompromiss aus maximal aufbringbaren Drehmomenten und noch akzeptabler Ausnutzung des Bauraumes an der Stelleinheit und der Basis gewährleistet.

Weiterhin bevorzugt weist das Halteelement einen Bereich mit einer ersten Signalfarbe auf, welcher in einer Haltestellung unverdeckt durch Teile des Sicherungsmechanismus sichtbar ist. Neben der Funktion des Halteelements zur Sicherung des gesicherten Zustands des Sicherungsmechanismus hat das Halteelement bevorzugt auch die Funktion einem Anwender zu signalisieren, ob der gesicherte Zustand oder der ungesicherte Zustand des Sicherungsmechanismus vorliegt. Hierfür weist das Halteelement vorzugsweise in seinem nach außen ragenden Kopfbereich eine erste Signalfarbe auf. Als erste Signalfarbe eignet sich insbesondere grün, weil dies im allgemeinen Verständnis die Farbe für das korrekt eingestellt sein eines bestimmtes Zustandes ist. Grün signalisiert dem Anwender des Sicherungsmechanismus somit, dass die Basis ordnungsgemäß am Fahrzeug festgelegt ist und eine Fahrt mit dem Fahrzeug entsprechend möglich ist. Mit Vorteil kann als erste Signalfarbe auch eine fluoreszierende Farbkombination gewählt werden, wobei insbesondere grün oder blau als Grundfarbe bevorzugt sind.

Weiterhin bevorzugt weist die Stelleinheit eine zweite Haltegeometrie auf, welche als Aussparung ausgebildet ist, wobei während das Halteelement nicht in seiner Haltestellung angeordnet ist, durch die zweite Haltegeometrie hindurch ein Bereich der Basis mit einer zweiten Signalfarbe sichtbar ist. Vorzugsweise in Ergänzung eines Bereiches einer ersten Signalfarbe auf dem Halteelement ist vorgesehen, dass an der Basis ein Bereich mit einer zweiten Signalfarbe vorgesehen ist, welcher für den Fall, dass das Halteelement nicht in der zweiten Haltegeometrie angeordnet ist, durch die als Aussparung ausgebildete zweite Haltegeometrie hindurch sichtbar ist. Es kann somit eine doppelte Signalwirkung erzielt werden. Zum einen wird der Anwender darauf hingewiesen, dass das mit der ersten Signalfarbe gekennzeichnete Halteelement nicht in seiner Haltestellung angeordnet und somit nicht von außen erkennbar ist. Andererseits wird zusätzlich durch die zweite Signalfarbe signalisiert, dass sich der Sicherungsmechanismus in der ungesicherten Stellung befindet, da die zweite Signalfarbe sichtbar ist. Als zweite Signalfarbe kommt insbesondere rot zum Einsatz, welches die intuitiv anerkannte Farbe für "Achtung!" oder "Gefahr" ist. Wenn also ein Anwender im Bereich der zweiten Haltegeometrie eine rote Farbe erkennt, so ist er gewarnt, dass die Stelleinheit nicht in der Rotationsstellung angeordnet ist, in welchem der gesicherte Zustand der Basis an dem Fahrzeug eingestellt ist. Darüber hinaus wäre es vorstellbar, dass der Bereich unmittelbar vor dem Eintreten des Halteelementes in die zweite Haltegeometrie ein mit einer dritten Signalfarbe, vorzugsweise gelb, gekennzeichneter Bereich an der Basis sichtbar ist, welcher signalisiert, dass die Haltestellung des Haltelementes und somit der gesicherte Zustand des Sicherungsmechanismus unmittelbar bevorsteht.

Weiterhin bevorzugt ist das Halteelement in seiner Haltestellung durch einen Kragen entgegen der Vorspannkraft abgestützt, wobei das Halteelement ausgelegt ist, bei Erreichen der Haltestellung geräuschvoll gegen den Kragen zu schlagen. Der Kragen, welcher in einer ersten Ausführungsform vorzugsweise am Halteelement selbst ausgebildet ist dient dazu, das Gleiten des Halteelementes aus der Basis oder aus dem Verbund von Basis und Stelleinheit zu verhindern. Der Kragen stützt sich dabei vorzugsweise an einer entsprechend an der Basis oder der Stelleinheit vorgesehen Schulter ab, wodurch verhindert wird, dass die Vorspannkraft des Rückstellmittels das Halteelement aus dem Verbund aus Basis und Stelleinheit hinaustreibt. Gleichzeitig kann der Kragen in Kombination mit der Schulter an der Stelleinheit und der Basis auch verwendet werden um bei Einrasten des Halteelementes in die Haltestellung ein deutlich vernehmbares Anschlaggeräusch zu erzeugen, welches dem Anwender neben der optischen Signalisierung auch akustisch signalisiert, dass nun die Stelleinheit derart relativ zur Basis verschwenkt ist, dass der Sicherungsmechanismus in seinem gesicherten Zustand vorliegt und das Halteelement in seiner Haltestellung angeordnet ist. Es kann hierfür vorgesehen sein, dass eine flache und aus hartem bzw. festem Material hergestellte Geometrie am Kragen des Halteelementes und an der entsprechenden Schulter an der Stelleinheit oder der Basis vorgesehen ist, welche ein deutlich vernehmbares Anschlaggeräusch erzeugen.

Bevorzugt umfasst die Basis einen Befestigungskörper, welcher an einer Felge der Basis festlegbar oder festgelegt ist, wobei der Befestigungskörper einen Anlageabschnitt zur Anlage und Abstützung des Anschlusselements aufweist, wobei die Stelleinheit auf der dem Anlageabschnitt gegenüberliegenden Seite angeordnet und an dem Anschlusselement festlegbar ist, wobei die erste Halteeinheit am Befestigungskörper angeordnet ist. Durch die Auslegung der Basis als Verbund mehrerer Elemente, ist es insbesondere möglich, im Falle von Beschädigungen einzelner Abschnitte der Basis, die entsprechenden Teile auszutauschen. Außerdem kann die Basis aus Bauteilen aus verschiedenem Material hergestellt sein, um die mechanisch stärker beanspruchten Teile aus festerem Material herzustellen. Dabei kann mit Vorteil die Felge aus leichterem Material, wie beispielsweise Kunststoff, hergestellt sein, während der Befestigungskörper, an welchem die Stelleinheit festgelegt ist, aus hochfestem Kunststoff oder Metall, bspw. Aluminium, ausgebildet ist.

Mit Vorteil ist das Anschlusselement als einstückiger Körper ausgebildet ist, vorzugsweise als Aluminiumgusskörper. Die Ausbildung des Anschlusselements aus starrem Material wird insbesondere dadurch ermöglicht, dass der Formschluss zwischen dem Anschlusselement und der Aufnahmegeometrie nicht über eine flexible Verformung eines Bereiches des Anschlusselements gesichert werden muss. Da im Rahmen der vorliegenden Erfindung der gesicherte Zustand mittels der Halteeinheit und deren Eingriff mit der Stelleinheit und der Basis gesichert ist, kann das Anschlusselement aus hartem und verschleißarmen Material, wie beispielsweise Metall, ausgebildet werden.

Vorzugsweise ist an der Basis zumindest eine erste Markierung und vorzugsweise eine zweite Markierung angeordnet, wobei die Stelleinheit zumindest eine Referenzmarkierung aufweist, welche im gesicherten Zustand der ersten Markierung unmittelbar gegenüberliegend angeordnet ist, wobei im ungesicherten Zustand vorzugsweise die Referenzmarkierung der zweiten Markierung unmittelbar gegenüberliegend angeordnet ist. Die Markierungen an der Basis und an der Stelleinheit signalisieren dem Anwender des Sicherungsmechanismus das Vorliegen einer bestimmten Drehstellung der Stelleinheit relativ zur Basis und geben damit Auskunft darüber, ob der gesicherte oder der ungesicherte Zustand vorliegt. Mit Vorteil sind die ersten und zweiten Markierungen und die Referenzmarkierung bereichsweise als auf einander zeigende Dreiecke ausgebildet, um bei Vorliegen des vollständig gesicherten Zustandes oder des vollständig ungesicherten Zustandes eine genaue Übereinstimmung zu zeigen.

Mit Vorteil weist die Stelleinheit ein Abdeckelement auf, an welchem die Betätigungsgeometrie ausgebildet ist und welches formschlüssig an einem Grundkörper der Stelleinheit festlegbar ist. Das Abdeckelement dient mit Vorteil dazu, den Bereich abzudecken, in welchem die Bolzen zur Verbindung der Stelleinheit mit dem Anschlusselement angeordnet sind. Hierdurch kann Schutz gegen eindringen von Flüssigkeit und damit einhergehende Korrosion verhindert werden. Außerdem kann das Abdeckelement als leicht austauschbares Bauteil ausgebildet sein, welches bei Verschleiß an der Betätigungsgeometrie einfach austauschbar ist. Zur Übertragung der Betätigungskräfte auf die Stelleinheit weist das Abdeckelement entsprechende Vorsprünge auf welche in den Grundkörper der Stelleinheit formschlüssig eingreifen.

Weitere Vorteile und Merkmale bevorzugter Ausführungsformen der Erfindung ergeben sich aus der nachfolgenden Beschreibung mit Bezug auf die beigefügten Figuren. Es zeigen:
- Fig. 1:: eine Explosionsansicht einer ersten bevorzugten Ausführungsform;
- Fig. 2 und 3:: die Ausführungsform von Figur 1 in einer Ansicht entlang der Rotationsachse R;
- Fig. 4:: eine Schnittansicht einer bevorzugten Ausführungsform des Sicherungsmechanismus;
- Fig. 5:: eine schematische Ansicht einer bevorzugten Ausführungsform des Sicherungsmechanismus;
- Fig. 6:: eine schematische Ansicht einer weiteren Ausführungsform des Sicherungsmechanismus; und
- Fig. 7:: eine Ansicht einer bevorzugten Ausführungsform des Werkzeuges.

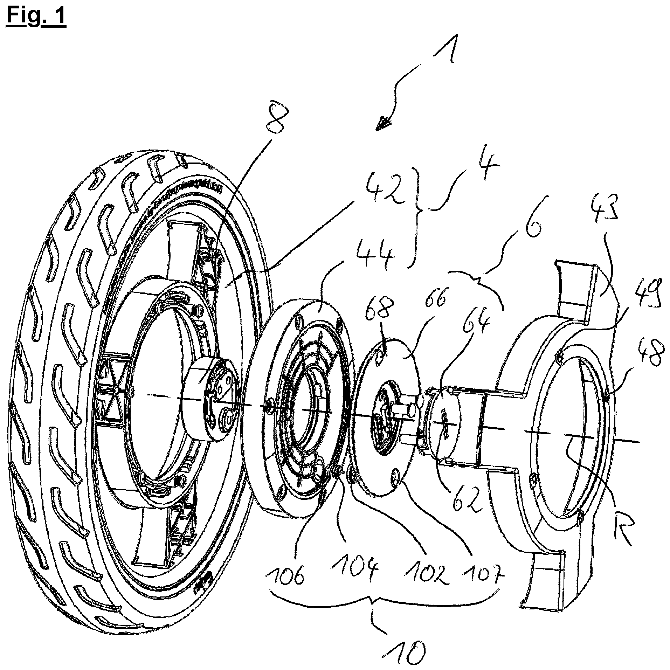

**Figur 1** zeigt eine Explosionsansicht einer ersten bevorzugten Ausführungsform der Erfindung, wobei der Sicherungsmechanismus 1 insbesondere zur Festlegung eines Kinderwagenrades ausgebildet ist. Die Basis 4 umfasst eine Felge 42 eines Rades und einen vorzugsweise ringförmigen Befestigungskörper 44. Am Befestigungskörper 44 kann vorzugsweise die Stelleinheit 6 mit dem Anschlusselement 8 vormontiert werden, wonach mit Vorteil der Befestigungsgrundkörper 44 an der Felge 42 mittels über den Umfang verteilter Bohrungen und Schrauben festlegbar ist. Die Stelleinheit 6 weist einen Grundkörper 66 und ein Abdeckelement 64 auf, wobei mit Vorteil die Betätigungsgeometrie 62 am Abdeckelement 64 ausgebildet ist. Das Fahrzeug und die Aufnahmegeometrie 92 sind in Fig. 1 nicht gezeigt. Vorzugsweise weist die Basis 4 eine Blende 43 auf, welche nach der Montage des Sicherungsmechanismus 1 auf die Felge 42 aufgesteckt wird um das Innenleben der Felge 42 zu schützen. Auf der Blende 43 sind in der vorliegenden Ausführungsform die ersten und zweiten Markierungen 48, 49 angebracht, welche gemeinsam mit der Referenzmarkierung 68 an der Stelleinheit 6 den Zustand des Sicherungsmechanismus anzeigen.

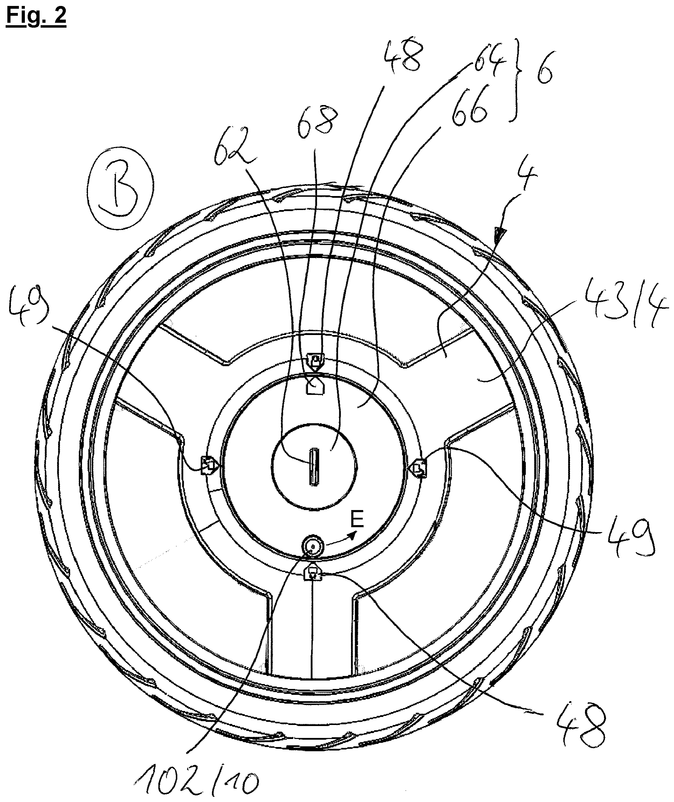

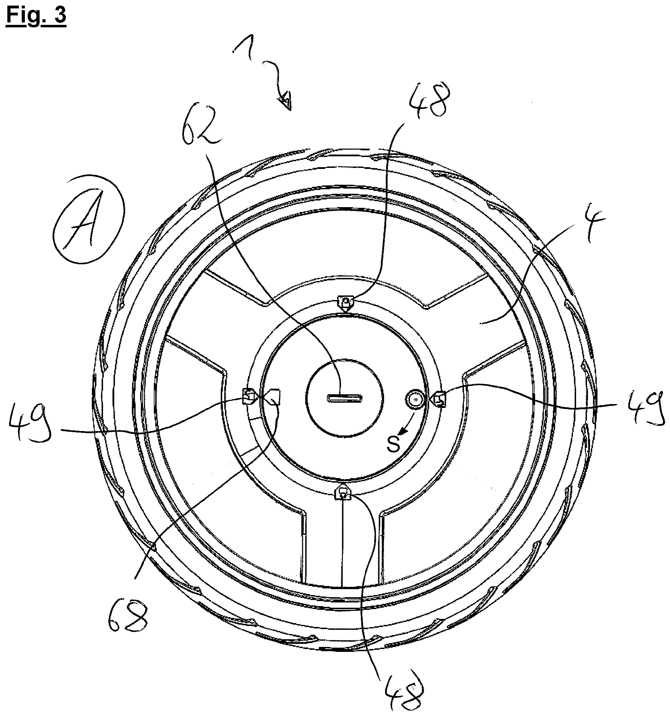

**Figuren 2** und **3** zeigen die Ausführungsform von Figur 1 in einer Ansicht entlang der Rotationsachse R, wobei Figur 2 den gesicherten Zustand B und Figur 3 den ungesicherten Zustand A zeigt. Im gesicherten Zustand B steht die Referenzmarkierung 68 einer der ersten Referenzmarkierung 48 unmittelbar gegenüber. Hierdurch ist, vorzugsweise zusätzlich zur auf dem Halteelement 102 angebrachten ersten Signalfarbe, deutlich angezeigt, dass sich der Sicherungsmechanismus 1 im gesicherten Zustand B befindet. Eine Verdrehung der Stelleinheit 6 um ca. 90° in einer Entsicherungsrichtung E versetzt den Sicherungsmechanismus in den in Figur 3 gezeigten ungesicherten Zustand. Figur 3 zeigt die Ausführungsform des Sicherungsmechanismus von Figur 2 im ungesicherten Zustand A. Dabei steht die Referenzmarkierung 68 einer der zweiten Markierungen 49 unmittelbar gegenüber. Um von dem in Figur 3 gezeigten Zustand in den gesicherten Zustand B zu gelangen, wird die Stelleinheit 6 in einer Sicherungsrichtung S relativ zur Basis 4 verdreht, wodurch das nicht gezeigte Anschlusselement 8 mit einer Aufnahmegeometrie 92 des Fahrzeuges 9 in formschlüssigen Eingriff gelangt.

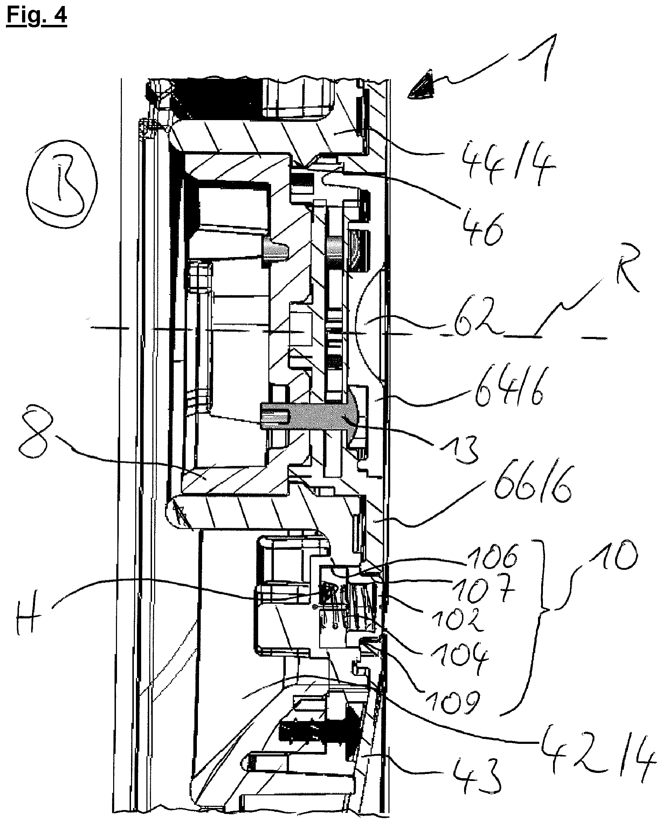

**Figur 4** zeigt eine Schnittansicht einer bevorzugten Ausführungsform des Sicherungsmechanismus 1. Die Stelleinheit 6 weist vorzugsweise einen Grundkörper 66 und ein Abdeckelement 64 auf, wobei das Abdeckelement 64 eine Betätigungsgeometrie 62 aufweist. Die Basis 4 weist mit Vorteil eine Felge 42 und einen Befestigungskörper 44 auf, wobei der Befestigungskörper 44 mit Vorteil einen Anlageabschnitt 46 aufweist, an welchem das Anschlusselement 8 zur Anlage gelangt. Die Stelleinheit 6 ist mittels Schraub- oder Bolzenelementen 13 an dem Anschlusselement 8 festgelegt, wobei beide Bauteile gegen Rotation zueinander gesichert und an der Basis 4 gegen Verlagerung parallel zur Rotationsachse R gesichert sind. Die Halteeinheit 10 ist in dieser Ausführungsform an dem Befestigungskörper 44 der Basis 4 festgelegt, wobei das Halteelement 102 in einer ersten Haltegeometrie 106 an der Basis 4 gemeinsam mit dem Rückstellmittel 104 gelagert ist. In dem in Fig. 4 gezeigten Zustand befindet sich das Halteelement 102 in seiner Haltestellung H und greift sowohl in der ersten Haltegeometrie 106 als auch an der an der Stelleinheit 6 ausgebildeten zweiten Haltegeometrie 107 ein. Der in Fig. 4 gezeigte Sicherungsmechanismus 1 befindet sich entsprechend in seinem gesicherten Zustand B. Dabei stützt sich das Halteelement 102 vorzugsweise mit einem Kragen 109 an einer entsprechend an der Stelleinheit 6 ausgebildeten Schulter ab, wodurch das herausfallen des Halteelements 102 verhindert wird.

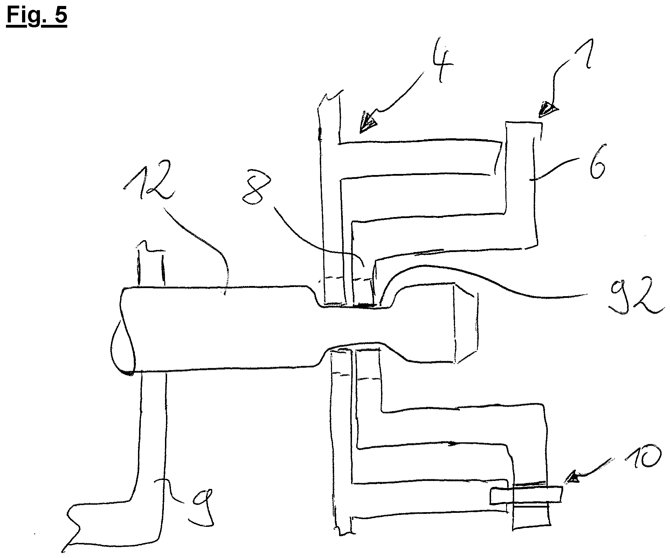

**Figur 5** zeigt eine schematische Ansicht einer bevorzugten Ausführungsform des Sicherungsmechanismus 1, welcher zur Festlegung an einem starren Achsstummel 12 eines Fahrzeuges 9 ausgelegt ist. Der Achsstummel 12 weist eine Aufnahmegeometrie 92 auf, welche mit Vorteil als lokal verengter zylindrischer Abschnitt des Achsstummels ausgebildet ist. Das Anschlusselement 8 mit Vorteil als einstückiger Abschnitt an der Stelleinheit 6 ausgebildet. Die Basis 4 weist ebenfalls einen Abschnitt zur Festlegung am Achsstummel auf, wobei durch das Zusammenwirken der Basis 4 und des Anschlusselements 8 in einer bestimmten Verdrehposition der beiden Baugruppen ein derartig verengter Querschnitt eingestellt ist, dass der Sicherungsmechanismus 1 an dem Achsstummel 12 formschlüssig festgelegt ist. In diesem gesicherten Zustand B sichert die Halteeinheit 10 die beteiligten Baugruppen gegen Verdrehung relativ zueinander.

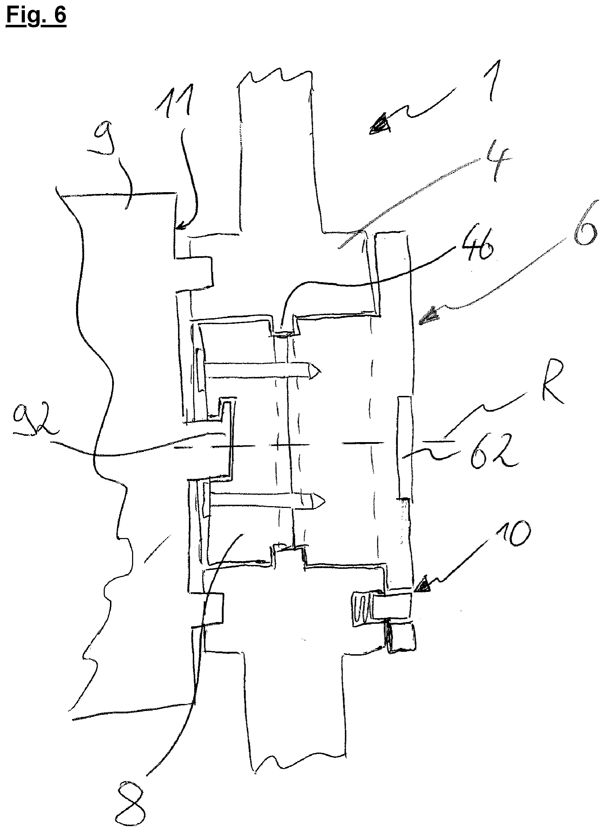

**Figur 6** zeigt eine schematische Ansicht einer weiteren Ausführungsform des Sicherungsmechanismus 1. Ähnlich zu den Ausführungsformen der Figuren 1 ― 4 ist der Sicherungsmechanismus 1 zur Festlegung an einer rotierenden Radanbindung 11 eines Fahrzeuges 9 ausgebildet. Das Anschlusselement 8 und die Stelleinheit 6 sind über Bolzen aneinander festgelegt, wobei sie vorzugsweise eine Hinterschneidung mit einem Anlageabschnitt 46 bilden und so an der Basis 4 festgelegt sind. Zwischen der Basis 4 und der rotierenden Radanbindung 11 sind formschlüssige Eingriffsmittel vorgesehen, welche die Basis 4 gegen Rotation relativ zur Radanbindung 11 sichert. Die Aufnahmegeometrie 92 der Radanbindung 11 ist mit Vorteil zur Herstellung einer Bajonettverbindung ausgebildet, was nur sehr schematisch dargestellt ist. Die Halteeinheit 10 sichert im gezeigten gesicherten Zustand B die Stelleinheit 6 gegen Verdrehung relativ zur Basis 4.

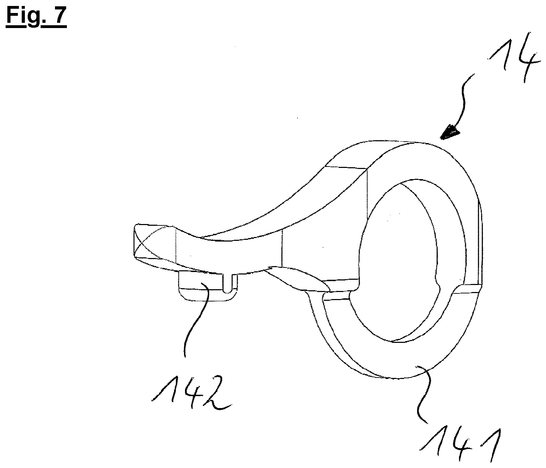

**Figur 7** zeigt eine bevorzugte Ausführungsform eines Werkzeuges 14 zur Betätigung der Stelleinheit 6, insbesondere bevorzugt in den in den Figuren 1 ― 4 gezeigten Ausführungsformen. Das Werkzeug 14 weist einen ersten Eingriffsabschnitt 141 zum Eingriff mit der Betätigungsgeometrie 62 der Stelleinheit auf. Weiterhin weist das Werkzeug 14 einen vom ersten Eingriffsabschnitt 141 beabstandeten zweiten Eingriffsabschnitt 142 auf, welcher dafür ausgelegt ist das Halteelement 102 zu betätigen. Ein Anwender kann auf einfache Weise mit dem Werkzeug 14 zunächst mit dem zweiten Eingriffsabschnitt 142 das Halteelement 102 aus dessen Haltestellung H heraus verlagern. Anschließend kann der Anwender mit dem Werkzeug 14 zumindest durch den Eingriff des ersten Eingriffsabschnitt 141 ein Drehmoment auf die Betätigungsgeometrie 62 und damit auf die Stelleinheit 6 übertragen. Bevorzugt unterstützt dabei auch ein formschlüssiger Eingriff des zweiten Eingriffsabschnitts 142 mit der an der Stelleinheit 6 vorgesehenen zweiten Haltegeometrie 107 die Drehmomentübertragung vom Werkzeug 14 auf die Stelleinheit 6.

### Bezugszeichen:

- 1: - Sicherungsmechanismus
- 4: - Basis
- 6: - Stelleinheit
- 8: - Anschlusselement
- 9: - Fahrzeug
- 10: - Halteeinheit
- 11: - rotierende Radanbindung
- 12: - starrer Achsstummel
- 13: - Schraub-/Bolzenelemente
- 14: - Werkzeug
- 42: - Felge
- 44: - Befestigungskörper
- 46: - Anlageabschnitt
- 48: - erste Markierung
- 49: - zweite Markierung
- 62: - Betätigungsgeometrie
- 64: - Abdeckelement
- 66: - Grundkörper
- 68: - Referenzmarkierung
- 92: - Aufnahmegeometrie
- 102: - Halteelement
- 104: - Rückstellmittel
- 106: - erste Haltegeometrie
- 107: - zweite Haltegeometrie
- 109: - Kragen
- 141: - erster Eingriffsabschnitt
- 142: - zweiter Eingriffsabschnitt
- A: - ungesicherter Zustand
- B: - gesicherter Zustand
- E: - Entsicherungsrichtung
- H: - Haltestellung
- R: - Rotationsachse
- S: - Sicherungsrichtung

## Patentansprüche

1. Sicherungsmechanismus (1) umfassend eine Basis (4) und eine Stelleinheit (6),
wobei die Stelleinheit (6) gegen Verlagerung längs einer Rotationsachse (R) relativ zur Basis (4) sicherbar ist und in einem ungesicherten Zustand (A) relativ zur Basis (4) um die Rotationsachse (R) drehbar gelagert ist,
wobei in einem gesicherten Zustand (B) eine Halteeinheit (10) zwischen der Stelleinheit (6) und der Basis (4) wirkt und eine Rotation der Stelleinheit (6) relativ zur Basis (4) verhindert,
wobei die Stelleinheit (6) mit einem Anschlusselement (8) in Eingriff steht, welches in einen lösbaren Eingriff mit der Aufnahmegeometrie (92) eines Fahrzeuges (9) bringbar ist,
wobei ein Verdrehen der Stelleinheit (6) relativ zur Basis (4) in einer Sicherungsrichtung (S) das Anschlusselement (8) in Eingriff mit der Aufnahmegeometrie (92) bringt,
wobei ein Verdrehen der Stelleinheit (6) relativ zur Basis (4) in einer Entsicherungsrichtung (E) das Anschlusselement (8) außer Eingriff mit der Aufnahmegeometrie (92) bringt.

2. Sicherungsmechanismus (1) nach Anspruch 1,
wobei die Basis (4) Teil einer Felge (42) eines Rades des bevorzugt als Kindertransportfahrzeug ausgebildeten Fahrzeuges (9) ist,
wobei die Aufnahmegeometrie (92) an einer rotierenden Radanbindung (11) oder an einem starren Achsstummel (12) ausgebildet ist.

3. Sicherungsmechanismus (1) nach einem der vorhergehenden Ansprüche, wobei die Halteeinheit (10) ein Halteelement (102) umfasst, welches von einem Rückstellmittel (104) gegen eine Haltestellung (H) vorgespannt an der Basis (4) oder an der Stelleinheit (6) gelagert ist,
wobei das Halteelement (102) in der Haltestellung (H) mit einer ersten Haltegeometrie (106) der Basis (4) und mit einer zweiten Haltegeometrie (107) der Stelleinheit (6) in formschlüssigem Eingriff steht und den Sicherungsmechanismus (1) im gesicherten Zustand (B) hält.

4. Sicherungsmechanismus (1) nach Anspruch 3,
wobei eine Verlagerung entgegen der Vorspannkraft das Halteelement (102) außer Eingriff mit der ersten oder der zweiten Haltegeometrie (106, 107) bringt,
wobei der Sicherungsmechanismus (1) in den ungesicherten Zustand (A) versetzt ist,
wobei sich das Haltelement (102) bei Verdrehung der Stelleinheit (6) an einer Stützfläche abstützt.

5. Sicherungsmechanismus (1) nach einem der Ansprüche 3 oder 4,
wobei die Vorspannkraft des Halteelements (102) parallel zur Rotationsachse (R) wirkt.

6. Sicherungsmechanismus (1) nach einem der Ansprüche 3 oder 4,
wobei die Vorspannkraft des Halteelements (102) orthogonal zur Rotationsachse (R) wirkt.

7. Sicherungsmechanismus (1) nach einem der vorhergehenden Ansprüche, wobei ein Werkzeug (14) vorgesehen ist, welches derart geformt ist, dass damit zum einen das Halteelement (102) aus seiner Haltestellung (H) und entgegen Vorspannkraft verlagert werden kann und gleichzeitig ein formschlüssiger Eingriff mit der Betätigungsgeometrie hergestellt ist, welcher das Übertragen eines Drehmomentes vom Anwender über das Werkzeug (14) an die Stelleinheit (6) erlaubt.

8. Sicherungsmechanismus (1) nach einem der vorhergehenden Ansprüche, wobei die Stelleinheit (6) eine Betätigungsgeometrie (62) aufweist, welche ausgelegt ist ein Drehmoment um die Rotationsachse (R) auf die Stelleinheit (6) zu übertragen.

9. Sicherungsmechanismus (1) nach einem der vorhergehenden Ansprüche, wobei die Halteeinheit (10) beabstandet von der Rotationsachse angeordnet ist,
wobei der geringste Abstand der Halteeinheit (10) von der Rotationsachse (R) vorzugsweise zumindest das 0,4-fache, bevorzugt das zumindest 0,6-fache der größten Erstreckung der Stelleinheit (6) beträgt.

10. Sicherungsmechanismus (1) nach einem der Ansprüche 3 ― 9,
wobei das Halteelement (102) einen Bereich mit einer ersten Signalfarbe aufweist, welcher in der Haltestellung (H) unverdeckt durch Teile des Sicherungsmechanismus (1) sichtbar ist.

11. Sicherungsmechanismus (1) nach einem der Ansprüche 3 ― 10,
wobei die Stelleinheit (6) eine zweite Haltegeometrie (107) aufweist, welche als Aussparung ausgebildet ist,
wobei während das Halteelement (102) nicht in seiner Haltestellung (H) angeordnet ist, durch die zweite Haltegeometrie (107) hindurch ein Bereich der Basis (4) mit einer zweiten Signalfarbe sichtbar ist.

12. Sicherungsmechanismus (1) nach einem der Ansprüche 3 ― 7,
wobei das Haltelement (102) in seiner Haltestellung (H) durch einen Kragen (109) entgegen der Vorspannkraft abgestützt ist,
wobei das Halteelement (102) ausgelegt ist, bei Erreichen der Haltestellung (H) geräuschvoll gegen den Kragen (109) zu schlagen.

13. Sicherungsmechanismus (1) nach einem der vorhergehenden Ansprüche, wobei die Basis (4) einen Befestigungskörper (44) umfasst, welcher an einer Felge (42) der Basis (4) festlegbar oder festgelegt ist,
wobei der Befestigungskörper (44) einen Anlageabschnitt (46) zur Anlage und Abstützung des Anschlusselements (8) aufweist,
wobei die Stelleinheit (6) auf der dem Anlageabschnitt (46) gegenüberliegenden Seite angeordnet und an dem Anschlusselement (8) festlegbar ist, wobei die erste Halteeinheit (10) am Befestigungskörper (44) angeordnet ist.

14. Sicherungsmechanismus (1) nach einem der vorhergehenden Ansprüche, wobei an der Basis (4) zumindest eine erste Markierung (48) und vorzugsweise eine zweite Markierung (49) angeordnet ist,
wobei die Stelleinheit (6) zumindest eine Referenzmarkierung (68) aufweist, welche im gesicherten Zustand (B) der ersten Markierung (48) unmittelbar gegenüberliegend angeordnet ist,
wobei im ungesicherten Zustand (A) vorzugsweise die Referenzmarkierung (68) der zweiten Markierung (49) unmittelbar gegenüberliegend angeordnet ist.

15. Sicherungsmechanismus (1) nach einem der vorhergehenden Ansprüche, wobei die Stelleinheit (6) ein Abdeckelement (64) aufweist, an welchem die Betätigungsgeometrie (62) ausgebildet ist und welches formschlüssig an einem Grundkörper (66) der Stelleinheit (6) festlegbar ist.
